# EUROPEAN PATENT SPECIFICATION

(11) **EP 3 313 252 B1**
(45) Date of publication and mention of the grant of the patent: **03.03.2021**
(21) Application number: 15731898.1
(22) Date of filing: 24.06.2015
(51) Int. Cl.: A47L 9/28, A47L 5/22, A47L 5/24, A47L 5/28, A47L 5/36, H02J 7/00, H02J 50/10, H02J 50/90

(54) **VACUUM CLEANER SYSTEM**
STAUBSAUGERSYSTEM
SYSTÈME D'ASPIRATEUR

(43) Date of publication of application: 02.05.2018
(73) Proprietor: AB Electrolux, 105 45 Stockholm (SE)
(72) Inventor: NYBERG, Curt, 105 45 Stockholm (SE); PERSSON, Michael, 105 45 Stockholm (SE); HJALMARSSON, Pär, 105 45 Stockholm (SE); ZITA, Johann, 105 45 Stockholm (SE); TROBERG, Henrik, 105 45 Stockholm (SE)
(74) Representative: Electrolux Group Patents
(86) International application number: PCT/EP2015/064220
(87) International publication number: WO 2016/206732

(56) References cited:
- WO-A2-2007/063377
- KR-A- 20090 007 906
- US-A- 5 109 566
- US-A- 5 787 545

## Description

The present invention relates generally to the field of vacuum cleaners. More specifically, the present invention is related to a vacuum cleaner system comprising a vacuum cleaner and a charger. The vacuum cleaner comprises a first housing comprising an air inlet, an air outlet, a motor fan unit for creating an airflow from the air inlet to the air outlet, a battery for powering the motor fan unit, and a first unit for charging the battery. The charger comprises a second housing comprising a second unit for changing the battery. The first unit and the second unit are adapted for wireless power transfer from the second unit to the first unit. Preferably, the first unit comprises a first coil connected to the battery and the second unit comprises a second coil adapted to be connected to an external power source.

### BACKGROUND OF THE INVENTION

Vacuum cleaner systems are well-known in prior art. Vacuum cleaner systems generally comprises a vacuum cleaner, typically a battery powered vacuum cleaner, and a charger. During charging of the batteries the vacuum cleaner is arranged in a charging position in or close to the charger. The charger is typically connected to an external power source, eg. mains, and transfers power to the batteries in the vacuum cleaner. This transfer can be made by contact elements, usually metal elements, arranged in a hole in the housing of both the vacuum cleaner and the charger. Another solution is to use a plug and socket solution. A problem with contact elements could be that the elements on the charger and/or the vacuum cleaner can be subjected to dirt, which could reduce the contact, and thereby the power transfer, between the vacuum cleaner and the charger. Another problem could be the need of extra holes and/or fastening devices in/on the housing of the vacuum cleaner and/or the charger.

Document US 5109566 A discloses a self-running cleaning apparatus provided with a electromagnetic induction power coupling system for charging. Document US 5787545 A discloses a system for automatic foor dusting and discharging of dust. The system comprises a mobile robot and a discharger device. In the discharger device recharging of the robots battery may be done by a induction based supplying device.

### SUMMARY OF THE INVENTION

It is an objective of embodiments of the invention to provide a vacuum cleaner system which reduces some or at least parts of the above mentioned problems, and/or which is easy to use, reliable and user friendly.

At least some or part of the objectives is solved by the features of the independent claim. Preferred embodiments are given in the dependent claims. If not explicitly indicated otherwise, embodiments of the invention can be freely combined with each other. The invention can be used in canister vacuum cleaners, robotic vacuum cleaners, handheld portable vacuum cleaners, stick vacuum cleaners, upright vacuum cleaners, as well as so called 2-in-1 vacuum cleaners.

According to a first aspect, a vacuum cleaner system is disclosed. The vacuum cleaner vacuum cleaner system comprises a vacuum cleaner and a charger. The vacuum cleaner comprises a first housing. The first housing comprises an air inlet, an air outlet and a motor fan unit for creating an airflow from the air inlet to the air outlet. The first housing also comprises a battery for powering the motor fan unit and a first unit for charging the battery. The charger comprises a second housing comprising a second unit for charging the battery. The first unit is connected to the battery. The second unit is adapted to be connected to an external power source. The first unit and the second unit are adapted for wireless power transfer from the second unit to the first unit.

Wireless power transfer system consists of a sender unit, connected to a source of power, eg. mains power, which converts the power to a time-varying electromagnetic field, and one or more receiver units which receives the power and convert it back to DC or AC electric power which is used to charge a battery or to run an electric motor or similar. In the sender unit the input power is converted to an oscillating electromagnetic field by some type of coil, it could be a coil of wire, a coil structure on a PCB or similar, which generates a magnetic field. A similar coil in the receiver converts the oscillating fields to an electric current. In the embodiments disclosed the sender unit corresponds to a charger and the receiver is some kind of vacuum cleaner.

According to embodiments the first unit comprises one or several coils, and the second unit comprises one or several coils.

According to embodiments the first unit comprises a first control unit for controlling the status of the battery.

According to embodiments the second unit comprises a second control unit for controlling the charging and/or status of the battery.

According to embodiments the second control unit has means controlling the presence of the vacuum cleaner in a charging position.

According to embodiments the second control unit receives information regarding the status of the battery from the first control unit when the vacuum cleaner is in the charging position.

According to embodiments the second control unit receives information from the first control unit when charging of the battery should start, and/or when the charging of the battery should end.

According to embodiments the first control unit transmits information to the second control unit by wireless communication, eg. NFC (Near Field Communication) or radio, when the vacuum cleaner is in the charging position.

According to embodiments the second control unit transmits information to the first control unit by wireless communication, eg. NFC (Near Field Communication) or radio when the vacuum cleaner is in the charging position.

According to embodiments the charger is arranged to be located on the floor, on a wall, on a table, bench or similar.

According to embodiments the first unit is arranged in or near the wall of the housing of the vacuum cleaner, eg. molded in the wall of the housing, arranged between two parts of the wall, or on the wall under a layer of eg paint.

According to embodiments the vacuum cleaning device comprises a robotic vacuum cleaner and the first unit is arranged on or in the front bumper part.

According to embodiments the vacuum cleaning device comprises a robotic vacuum cleaner wherein the first unit comprises one or more coils arranged on or in the front bumper part.

According to embodiments the vacuum cleaning device comprises a robotic vacuum cleaner and wherein the first unit comprises a first coil arranged in or close to the underside of the housing.

According to embodiments the vacuum cleaning device comprises a portable handheld vacuum cleaner, especially a wet -and-dry vacuum cleaner, having a bottom part arranged to support the vacuum cleaner in an up-right storing position, and wherein at least a part of the first unit is arranged in or close to said bottom part.

According to embodiments the charger comprises a support surface for supporting the bottom part of the vacuum cleaner in the charging position

According to embodiments the support surface is horizontal and the bottom part of the vacuum cleaner flat.

According to embodiments the support surface is horizontal with one or more protrusions and the bottom part of the vacuum cleaner comprises one or more apertures fitting onto the protrusions in the charging position.

According to embodiments the support surface is horizontal with one or more apertures and the bottom part of the vacuum cleaner comprises one or more protruding parts fitting into the apertures in the charging position.

According to embodiments the vacuum cleaner comprises a stick part for arranging a handheld portable vacuum cleaner in the stick part, and such a handheld portable vacuum cleaner, the first unit is arranged in the stick part.

According to embodiments a battery is arranged in the stick part.

According to embodiments the stick part comprises a third coil, and the handheld portable vacuum cleaner comprises a forth coil.

According to embodiments the third coil is connected to the first unit and is located in the area where the handheld portable vacuum cleaner can be arranged, and the fourth coil is connected to a battery in the handheld portable vacuum cleaner and is arranged in the area of the handheld portable vacuum cleaner facing the stick part when the handheld portable vacuum cleaner is arranged in the stick part.

According to embodiments the vacuum cleaner comprises a stick part for arranging a handheld portable vacuum cleaner in the stick part and such a handheld portable vacuum cleaner, the first unit is arranged in the handheld portable vacuum cleaner.

According to embodiments the second unit is arranged in a charger, and an extension coil is arranged in the stick part to transfer power and/or communication between the second unit and first unit.

According to embodiments the vacuum cleaner comprises a stick or upright vacuum cleaner, wherein the first unit is arranged in an area facing the user during use, and the second unit is arranged in a vertically extending part of the charger.

According to embodiments the vacuum cleaner comprises a stick or upright vacuum cleaner, wherein the first unit is arranged in the nozzle.

According to embodiments the second unit is arranged in a horizontally extending part of the charger.

According to embodiments the vacuum cleaner comprises a canister vacuum cleaner, and the first unit is arranged on the side of the housing, in the rear of the housing or on the underside of the housing.

Advantageously, the vacuum cleaner system reduces the number of holes in both the vacuum cleaner housing and the housing of the charger. Especially reducing the need for sealing at only a few holes reduces the manufacturing time. Preferably, the need for sealing some holes can be reduced and a housing without holes for contact elements could be made more resistant from dust, moist or liquid entering the housing.

### BRIEF DESCRIPTION OF THE DRAWINGS

The various aspects of the invention, including its particular features and advantages, will be readily understood from the following detailed description and the accompanying drawings, in which:
Fig. 1 shows a vacuum cleaner system;
Fig. 2 shows a vacuum cleaner system comprising a hand held vacuum cleaner;
Fig. 3 shows a vacuum cleaner system comprising a robotic vacuum cleaner;
Fig. 4 shows a vacuum cleaner system comprising a stick vacuum cleaner;
Fig. 5 shows a vacuum cleaner system comprising a 2-in-1 vacuum cleaner;
Fig. 6 shows a vacuum cleaner system comprising a canister vacuum cleaner;

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

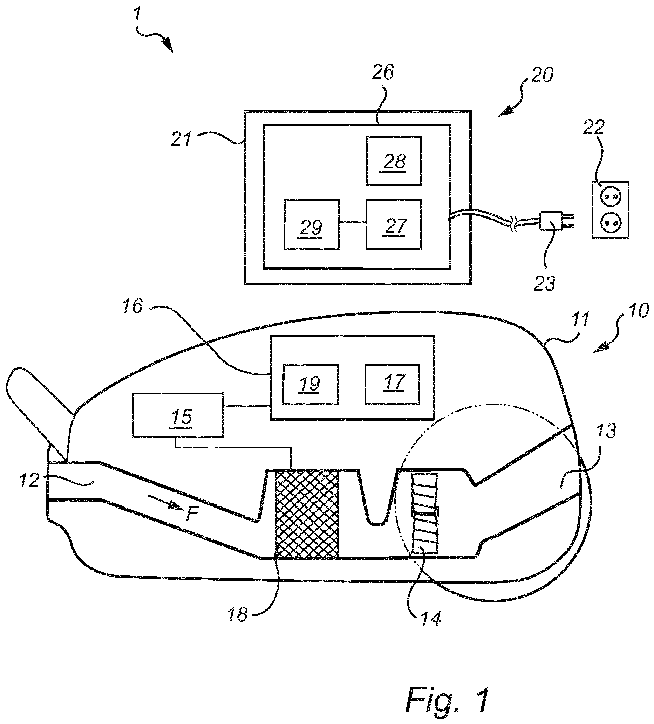

Figure 1 shows a vacuum cleaner system (1). The vacuum cleaner system (1) comprises a vacuum cleaner (10), eg. a robotic vacuum cleaner, a handheld vacuum cleaner, a stick vacuum cleaner, an upright vacuum cleaner or a canister vacuum cleaner, and a charger (20). The vacuum cleaner (10) comprises a first housing (11). The first housing (11) comprises an air inlet (12), an air outlet (13) and a motor fan unit (14) for creating an airflow (F) from the air inlet (11) to the air outlet (12). The airflow (F) created by the motor fan unit (14) is transporting dust and debris from the air inlet (12) to a dust separation unit (18). In the dust separation unit (18) the dust and debris is separated from the airflow (F) and the airflow (F) continues through the motor fan unit (14) and to the air outlet (13). The dust separation unit (18) can by in the form of an air permeable dustbag, filter or one or several cyclones.

The first housing (11) also comprises a battery (15), comprising one or several batteries or battery packs, for powering the motor fan unit (14). The first housing also comprises a first unit (16), for wireless power transfer, connected to the battery (15). The first unit (16) is connected for charging the battery (15). The first unit (16) comprises a first control unit (17) for controlling the status of the battery. The first unit (16) comprises a first coil (19) and is connected to the battery (15).

The charger (20) comprises a second housing (21) comprising a second unit (26), for wireless power transfer to the first unit (16). The wireless power transfer is for charging the battery (15) of the vacuum cleaner (10). The second unit (26) comprises a second coil (29), and is adapted to be connected to an external power source (22), eg. mains power. The second unit (26) comprises a second control unit (27) for controlling the charging of the battery (15) and/or the status of the battery (15). The second control unit (27) has means (28) for controlling the presence of the vacuum cleaner in a charging position in or close to the charger (20). The charger comprises a connector (23) for connecting the charger to an external power source (22). The connector (23) is connected to the second unit (26), and thereby also to the second coil (29).

The second control unit (27) receives information regarding the status of the battery (15) from the first control unit (17) when the vacuum cleaner (10) is in a charging position.

The second control unit (27) receives information from the first control unit (17) when the charging of the battery (15) should start, and/or when the charging of the battery (15) should end.

The first control unit (17) transmits information to the second control unit (27) by wireless communication, preferably by NFC (Near Field Communication) or radio communication, when the vacuum cleaner (10) is in a charging position.

The second control unit (27) transmits information to the first control unit (17) by wireless communication, preferably by NFC (Near Field Communication) or radio communication when the vacuum cleaner (10) is in a charging position.

In Figure 1 the charger (20) can be arranged to be located on the floor, mounted to a wall, put on a shelf, table, bench or similar, mounted in a stand for the vacuum cleaner or otherwise arranged in a suitable way.

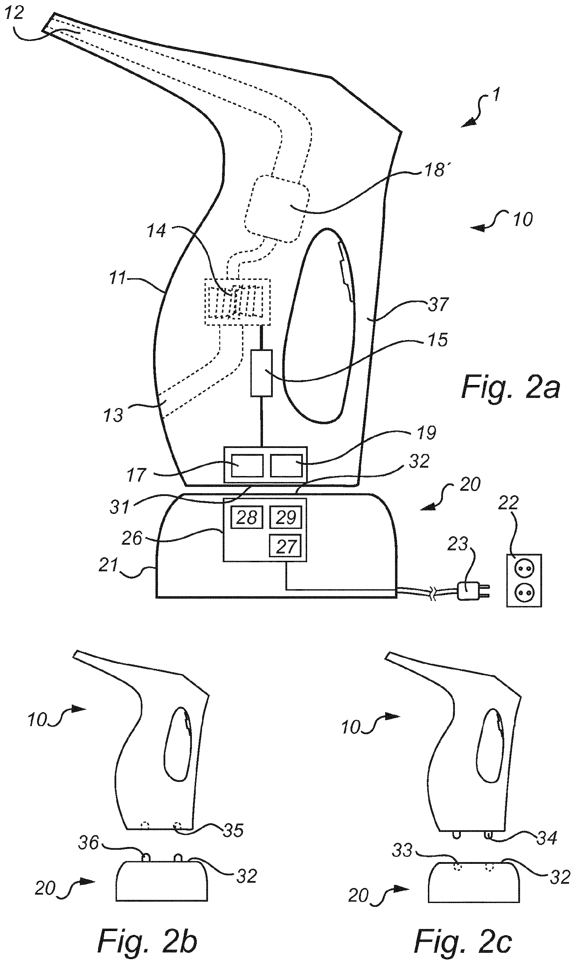

In Figures 2a-2c a vacuum cleaner system with a portable handheld vacuum cleaner is showed, especially a handheld wet - and-dry vacuum cleaner.

The vacuum cleaner system has the same parts as shown in Figure 1.

The vacuum cleaning system (1) comprises a portable handheld vacuum cleaner (10), especially a wet -and-dry vacuum cleaner. In a wet-and dry vacuum cleaner the dust separation unit (18) is arranged to separate also the liquid from the air. The dust separation unit (18) then also comprises a receptacle for dirty air separated from the airflow (not shown).

The first housing (11) comprising a bottom part (31) arranged to support the vacuum cleaner (10) in an up-right storing position. At least a part of the first unit (16) is arranged in or close to said bottom part (31). The first unit (16) comprises a first coil (19). The first coil (19) is arranged in or close to said bottom part (31).

The charger (20) comprises a second housing (21). The second housing (21) comprises a support surface (32) for supporting the bottom part (31) of the vacuum cleaner in the charging position.

At least a part of the second unit (26) is arranged in or close to said support surface (32). The second unit comprises a second coil (29). The second coil (29) is arranged in or close to said support surface (32).

The support surface (32) is horizontal and the bottom part (31) of the vacuum cleaner is flat.

Alternatively, as seen in Figure 2b, the support surface (32) is horizontal with one or more protrusions (36) and the bottom part of the vacuum cleaner comprises one or more apertures (35) fitting onto the protrusions (36) in the charging position.

Alternatively, as seen in Figure 2c, the support surface (32) is horizontal with one or more apertures (33) and the bottom part (31) of the vacuum cleaner comprises one or more protruding parts (34) fitting into the apertures (33) in the charging position. In this case it is preferred that the protrusions on the vacuum cleaner are of such a number and such arranged that the vacuum cleaner can stand on a flat surface without tipping.

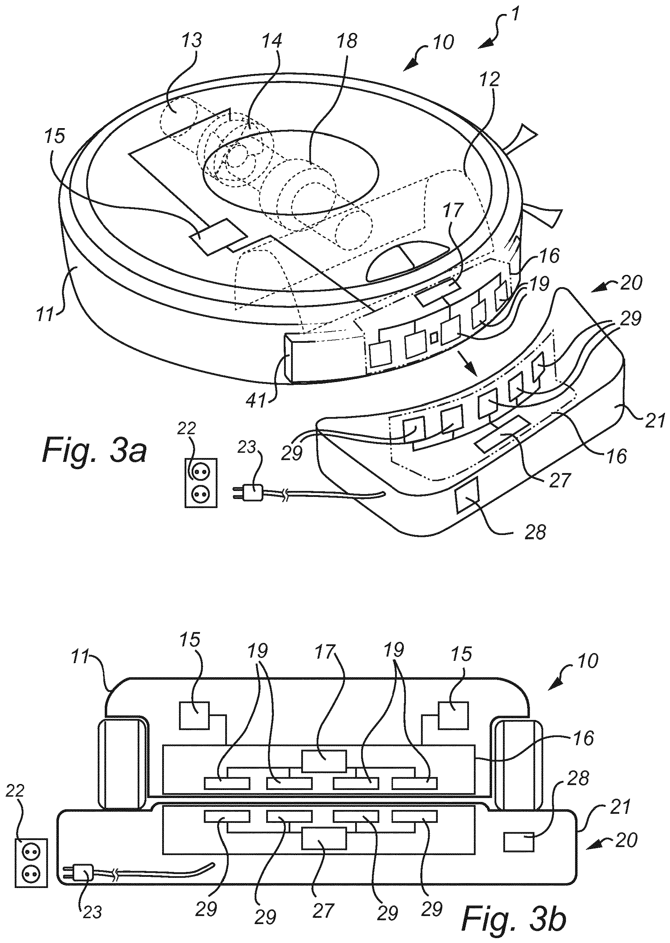

Figures 3a-3b shows a vacuum cleaner system with a robotic vacuum cleaner.

The robotic vacuum cleaner system has the same parts as shown in Figure 1.

The robotic vacuum cleaner (10) comprises a first housing (11) comprises a front bumper part (41). The front bumper part (41) is moveable relative to the main housing of the robotic vacuum cleaner. The idea is that when the bumper moves relative to the main housing it is an indication of an obstacle and the robotic vacuum cleaner stop, change direction or do some other action. At least a part of the first unit (16) is arranged on or in the front bumper part (41). The first unit (16) comprises one or more first coils (19) and a first control unit (17). At least the first coil/s (19) is/are arranged on or in the front bumper part (41).

The first coil (19) arranged in the front bumper part (41) could be molded in the bumper part, arranged between two parts of the bumper part, or on the bumper part under a layer of eg paint.

Alternatively, as seen in Fig 3b, the first housing (11) comprises a first unit (16) comprising one or more first coils (19) arranged in or close to the underside of the housing. The second unit (26) comprising one or more second coils (29) are arranged facing the underside of the robotic vacuum cleaner. Preferably the charger (20) comprises a raised area under the robotic vacuum cleaner so that the distance between the first coil/s (19) and the second coil/s (29) can be reduced.

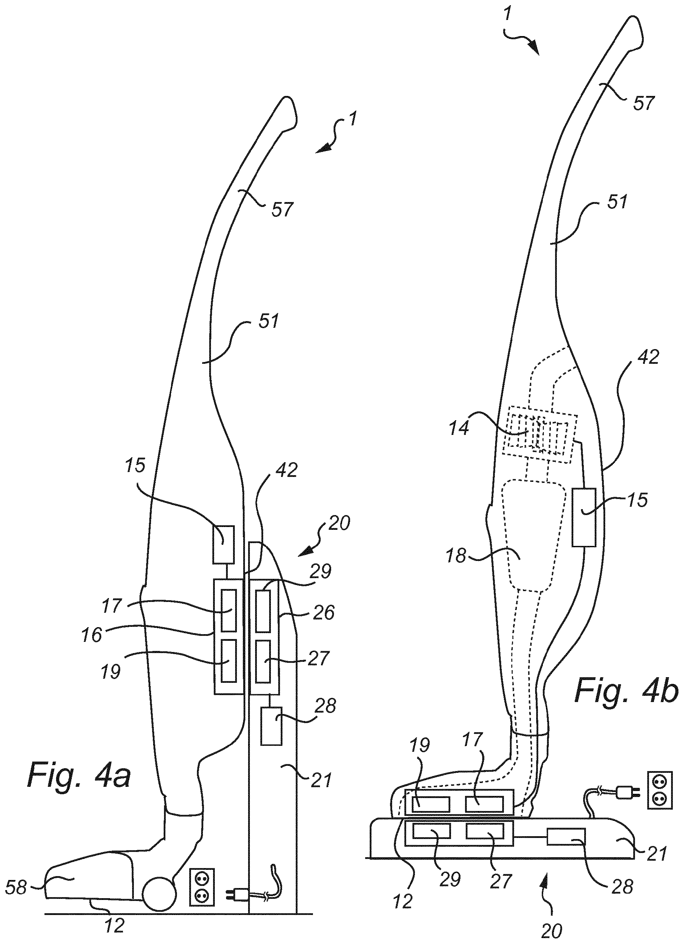

Figure 4a-4b shows a vacuum cleaner system wherein the vacuum cleaner comprises a stick and/or an upright vacuum cleaner.

The stick or upright vacuum cleaner (10) and the charger (20) have the same parts as in Figure 1.

The stick or upright vacuum cleaner (10) comprises a nozzle (58) in which the air inlet (12) is arranged. The nozzle (58) is primarily arranged to be used during cleaning of a floor. The stick part (51) also has a handle (57), with switching means for turning the vacuum cleaner on/off, power regulation etc (not shown).

The first unit (16) is arranged in an area (42) of the vacuum cleaner (10) facing the user during use, and the second unit (26) is arranged in a vertically extending part of the charger (20).

The first unit (16) comprises a first coil (19) arranged in the area (42) facing the user during use, and the second unit (26) comprises a second coil (29) arranged in the vertically extending part of the charger (20) facing the said area (42) when the vacuum cleaner is in the charging position.

Alternatively, as seen in Fig 4b, the vacuum cleaner system comprises a stick or upright vacuum cleaner wherein the first coil (19) is arranged in the nozzle (58). The second unit (26) comprising the second coil (29) is arranged in a horizontally extending part of the charger (20).

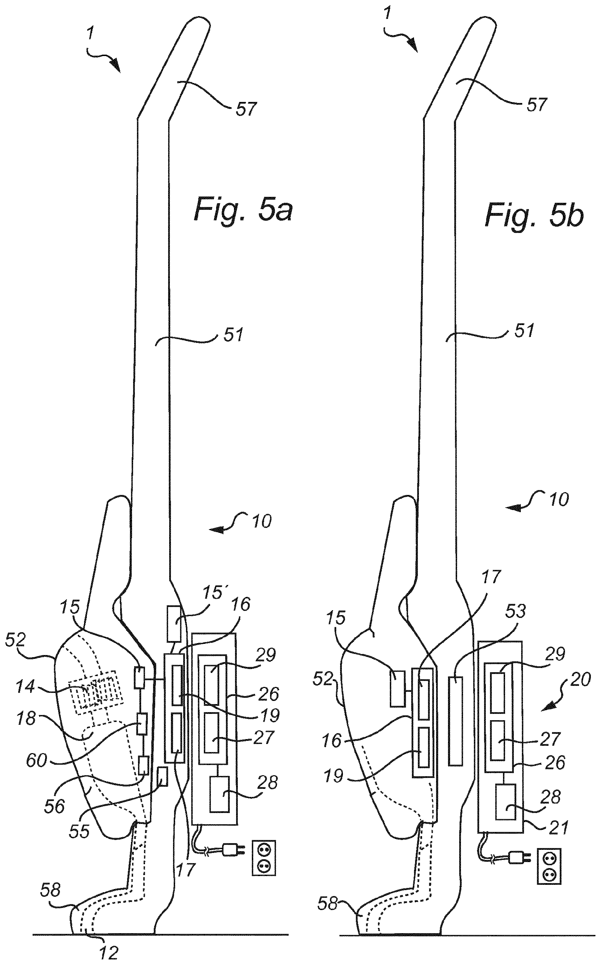

Figure 5a-5b shows a vacuum cleaner system with a vacuum cleaner comprises a stick part for arranging a handheld portable vacuum cleaner in the stick part, and such a handheld portable vacuum cleaner.

The vacuum cleaner and charger in Figure 5a-5b has the same parts as shown in Figure 1.

The vacuum cleaner (10) comprises a hand held portable vacuum cleaner (52) and a stick part (51). The handheld portable vacuum cleaner (52) can be used separate from the stick part, eg for cleaning of table, furniture etc. When the handheld portable vacuum cleaner (52) is arranged in the stick part (51) it is mainly used for floor cleaning. The vacuum cleaner has a nozzle (58) in which the air inlet (12) is arranged. The stick part (51) also has a handle (57), with switching means for turning the vacuum cleaner on/off, power regulation etc (not shown).

The first unit (16) is arranged in the stick part (51). The first unit (16) is connected to a battery (15) arranged in the handheld portable vacuum cleaner (52). The connection between the stick part (51) and the handheld portable vacuum cleaner (52) can be made by contacts (not shown) in a known way. The first unit (16) comprises a first coil (19) and a first control unit (17). The charger (20) comprises a second unit (26) comprising a second coil (29), preferably facing the first coil in the charging position, and a second control unit (27).

In Figure 5a it is also shown that the stick part (51) comprises a second battery (15') connected to the first unit (16). The first unit (16) controls the charging of this second battery as well as controlling the power transfers from the second battery to the motor fan unit (14) in the hand held portable vacuum cleaner (52).

In Figure 5a it is also disclosed to have a third coil (55) in the stick part (51). The handheld portable vacuum cleaner comprises a forth coil (56). The third coil (55) is connected to the first unit (16) and is located in the area where the handheld portable vacuum cleaner (52) can be arranged. The fourth coil (56) is connected to a battery (15), through a third control unit (60). The third control unit (60) controls the charging of the battery in a similar way as the first control unit controls the charging in the embodiment shown in Fig. 1. The third control unit is arranged in the handheld portable vacuum cleaner (52). The fourth coil (56) is arranged in the area of the handheld portable vacuum cleaner (52) facing the stick part (51) when the handheld portable vacuum cleaner is arranged in the stick part. The third (55) and forth coils (56) are facing each other when the handheld portable vacuum cleaner is arranged in the stick part. The third and fourth coils transfer power and information from the stick part to the handheld portable vacuum cleaner. The second unit (26) comprising a second coil (29) and a second control unit (27) is arranged in a charger (20).

In Figure 5b a vacuum cleaner system is disclosed in which the second unit (26) is arranged in a charger (20). The first unit (16) is arranged in a handheld portable vacuum cleaner (52). The first unit (16) comprises a first coil (19) and a first control unit (17). The first unit (16) is connected to a battery (15). The stick part (51), in which the handheld portable vacuum cleaner (52) can be arranged, comprises an extension coil (53). The extension coil extends the magnetic field from the second coil (29) during power transfer from the changer to the battery (15) through the first coil (19) in the handheld portable vacuum cleaner.

The extension coil (53) can also act as a relay station for communication between the second unit (26) and the first unit (16) and vice versa.

The extension coil (53) is arranged in the stick part (51) so that a part of the extension coil (53) is close to or facing at least a part of the second coil (29). Furthermore, the extension coil (53) is arranged in the stick part (51) so that a part of the extension coil is close to or facing at least a part of the first coil (19). The extension coil (53) is arranged in the stick part (51) to transfer power and/or communication between the second unit (26) and first unit (16).

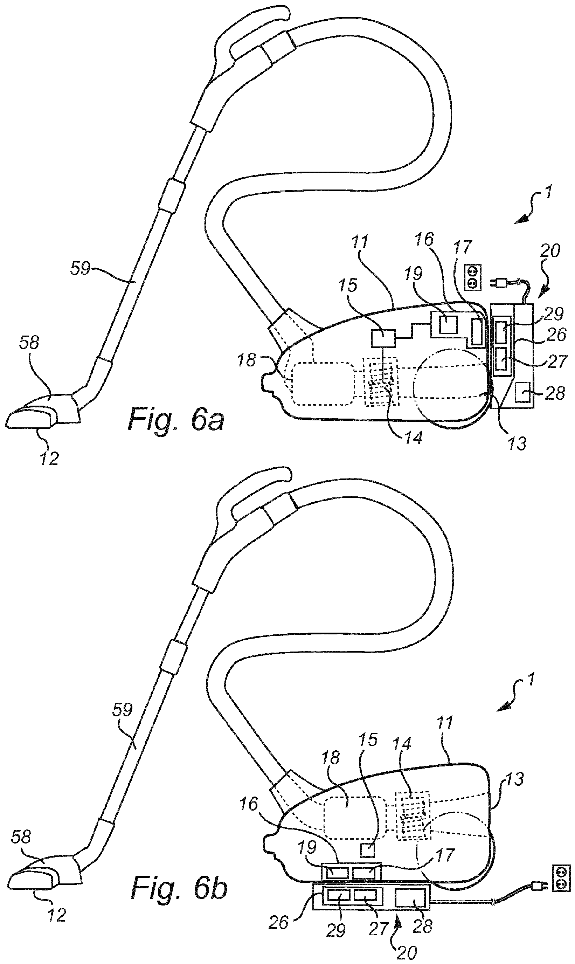

Figures 6a and 6b show a vacuum cleaner system with a canister vacuum cleaner.

The canister vacuum cleaner and charger in Figures 6a and 6b has the same parts as in Figure 1.

A canister vacuum cleaner is mainly intended to be used on the floor. The vacuum cleaner (10) comprises a hose (59) connected to the vacuum cleaner, in the other end of the hose a nozzle with an air inlet (12) is arranged.

The vacuum cleaner has a first unit (16) comprising a first control unit (17) and a first coil (19). The first unit (16) is connected to a battery (15). The first coil (19) is arranged on the side of the housing, in the rear of the housing or on the underside of the housing.

In Figure 6a the first coil (19) is arranged in the rear of the vacuum cleaner. The second coil (29) is arranged in a charger (20). The first coil (29) and the second coil (29) are arranged so that they are close or facing each other during the charging.

In Figure 6b the first coil (19) is arranged in a bottom part/underside of the first housing (11). The second coil (29) is arranged in a charger (20). At least a part of the charger is arranged under the first housing (11) of the vacuum cleaner during charging. In this position the first coil (19) and the second coil (29) are arranged so that they are close or facing each other during the charging.

Above, embodiments of the vacuum cleaner according to the present invention as defined in the appended claims have been described. These should be seen as merely non-limiting examples. As understood by a skilled person, many modifications and alternative embodiments are possible within the scope of the invention.

### List of reference numerals

- 1: vacuum cleaner system
- 10: vacuum cleaner
- 11: First housing
- 12: Air inlet
- 13: Air outlet
- 14: Motor-fan unit
- 15: Battery
- 16: First unit
- 17: First control unit
- 18: Dust separation unit
- 19: First coil
- 20: Charger
- 21: Second housing
- 22: External power source
- 23: Connector
- 26: Second unit
- 27: Second control unit
- 28: Means
- 29: Second coil

- 31: Bottom part
- 32: Support surface
- 33: Aperture
- 34: Protrusion
- 35: Aperture
- 36: Protrusion
- 37: Handle

- 41: Bumper part
- 42: Area of vacuum cleaner

- 51: Stick part
- 52: Hand held vacuum cleaner
- 53: Extension coil
- 55: Third coil
- 56: Fourth coil
- 57: Handle
- 58: Nozzle
- 59: Hose

- 60: Third control unit

- F: airflow

## Claims

1. Vacuum cleaner system (1) comprising a vacuum cleaner (10) comprising: a first housing (11) comprising an air inlet (12), an air outlet (13), a motor fan unit (14) for creating an airflow (F) from the air inlet (12) to the air outlet (13), a battery (15) for powering the motor fan unit (14), and a first unit (16) for charging the battery (15);
and a charger (20) comprising a second housing (21) comprising a second unit (26) for charging the battery (15); wherein the first unit (16) is connected to the battery (15) and the second unit (26) is adapted to be connected to an external power source (22), and the first unit (16) and the second unit (26) are adapted for wireless power transfer from the second unit (26) to the first unit (16)wherein the first unit (16) comprises a first control unit (17) for controlling the status of the battery (15) **characte rised** in that the second unit (26) comprising a second control unit (27) for controlling the charging and/or status of the battery (15).

2. Vacuum cleaner system according to the claim above, wherein the first unit (16) comprises one or several first coil/s (19), and the second unit comprises one or several second coil/s (29).

3. Vacuum cleaner system according to claims 1 or 2, wherein the second control unit (27) has means (28) for controlling the presence of the vacuum cleaner in a charging position.

4. Vacuum cleaner system according to any of the claims 1-3 wherein, the second control unit (27) receives information regarding the status of the battery (15) from the first control unit (17) when the vacuum cleaner is in the charging position.

5. Vacuum cleaner system according to any of the claims 1-4 wherein, the second control unit (27) receives information from the first control unit (17) when the charging of the battery should start, and/or when the charging of the battery should end.

6. Vacuum cleaner system according to any of the claims 1-5 wherein, the first control unit (17) transmits information to the second control unit (27) by wireless communication, eg. NFC or radio, when the vacuum cleaner is in the charging position.

7. Vacuum cleaner system according to any of the claims 1-5 wherein, the second control unit (27) transmits information to the first control unit (17) by wireless communication, eg. NFC, when the vacuum cleaner is in the charging position.

8. Vacuum cleaner system according to any of the claims above, wherein the charger (20) is arranged to be located on the floor, on a wall or on a table, bench or similar.

9. Vacuum cleaner system according to any of the claims above, wherein at least a part of the first unit (16) is arranged in or near the wall of the housing of the vacuum cleaner, eg. molded in the wall of the housing, arranged between two parts of the wall, or on the wall under a layer of eg paint.

10. Vacuum cleaner system according to any of the claims 1-9 , wherein the vacuum cleaning device comprises a portable handheld vacuum cleaner, especially a wet -and-dry vacuum cleaner, having a bottom part (31) arranged to support the vacuum cleaner in an up-right storing position, and wherein at least a part of the first unit (16) is arranged in or close to said bottom part (31), preferably a first coil (19).

11. Vacuum cleaner system according to any of the claims 1-9, wherein the vacuum cleaner comprises a stick part (51) for arranging a handheld portable vacuum cleaner (52) in the stick part (51) and such a handheld portable vacuum cleaner (52), wherein the first unit (16) is arranged in the stick part (51).

12. Vacuum cleaner system according to claim 10, wherein the stick part (51) comprises a third coil (55), and the handheld portable vacuum cleaner (52) comprises a forth coil (56).

13. Vacuum cleaner system according to claim 11, wherein the third coil (55) is connected to the first unit (16) and is located in the area where the handheld portable vacuum cleaner (52) can be arranged, and the fourth coil (56) is connected to a battery (15) in the handheld portable vacuum cleaner (52) and is arranged in the area of the handheld portable vacuum cleaner facing the stick part when the handheld portable vacuum cleaner is arranged in the stick part.

14. Vacuum cleaner system according to any of the claims 1-9, wherein the vacuum cleaner comprises a stick part (51) for arranging a handheld portable vacuum cleaner (52) in the stick part (51), and such a handheld portable vacuum cleaner (52), wherein the first unit (16) is arranged in the handheld portable vacuum cleaner (52).

15. Vacuum cleaner system according to any of the claims 1-9, wherein the vacuum cleaner comprises a canister vacuum cleaner and at least a part of the first unit (16) is arranged on the side of the housing, in the rear of the housing or on the underside of the housing.

## Patentansprüche

1. Staubsaugersystem (1), das einen Staubsauger (10) enthält, der Folgendes umfasst: ein erstes Gehäuse (11), das einen Lufteinlass (12), einen Luftauslass (13), eine Motorgebläseeinheit (14) zum Erzeugen einer Luftströmung (F) von dem Lufteinlass (12) zu dem Luftauslass (13), eine Batterie (15), um die Motorgebläseeinheit (14) mit Energie zu versorgen, und eine erste Einheit (16) zum Laden der Batterie (15) umfasst;
und eine Ladestation (20), die ein zweites Gehäuse (21) umfasst, die eine zweite Einheit (26) zum Laden der Batterie (15) umfasst;
wobei die erste Einheit (16) mit der Batterie (15) verbunden ist und die zweite Einheit (26) so ausgelegt ist, dass sie mit einer externen Leistungsquelle (22) verbunden werden kann, und wobei die erste Einheit (16) und die zweite Einheit (26) für eine drahtlose Leistungsübertragung von der zweiten Einheit (26) zu der ersten Einheit (16) ausgelegt sind, wobei die erste Einheit (16) eine erste Steuereinheit (17) zum Steuern des Status der Batterie (15) umfasst, **dadurch gekennzeichnet, dass** die zweite Einheit (26) eine zweite Steuereinheit (27) zum Steuern des Ladens und/oder des Status der Batterie (15) umfasst.

2. Staubsaugersystem nach dem vorhergehenden Anspruch, wobei die erste Einheit (16) eine oder mehrere erste Spulen (19) umfasst und wobei die zweite Einheit eine oder mehrere zweite Spulen (29) umfasst.

3. Staubsaugersystem nach Anspruch 1 oder 2, wobei die zweite Steuereinheit (27) Mittel (28) besitzt, um die Präsenz des Staubsaugers in einer Ladeposition zu steuern.

4. Staubsaugersystem nach einem der Ansprüche 1-3, wobei die zweite Steuereinheit (27) Informationen bezüglich des Status der Batterie (15) von der ersten Steuereinheit (17) empfängt, wenn sich der Staubsauger in der Ladeposition befindet.

5. Staubsaugersystem nach einem der Ansprüche 1-4, wobei die zweite Steuereinheit (27) Informationen von der ersten Steuereinheit (17) empfängt, wenn das Laden der Batterie starten soll und/oder wenn das Laden der Batterie enden soll.

6. Staubsaugersystem nach einem der Ansprüche 1-5, wobei die erste Steuereinheit (17) Informationen an die zweite Steuereinheit (27) durch drahtlose Kommunikation, z.B. NFC oder Funk überträgt, wenn sich der Staubsauger in der Ladeposition befindet.

7. Staubsaugersystem nach einem der Ansprüche 1-5, wobei die zweite Steuereinheit (27) Informationen an die erste Steuereinheit (17) durch drahtlose Kommunikation, z.B. NFC, überträgt, wenn sich der Staubsauger in der Ladeposition befindet.

8. Staubsaugersystem nach einem der vorhergehenden Ansprüche, wobei die Ladestation (20) so ausgelegt ist, dass sie auf dem Boden, an einer Wand oder auf einem Tisch, einer Bank oder ähnlichem angeordnet werden kann.

9. Staubsaugersystem nach einem der vorhergehenden Ansprüche, wobei wenigstens ein Teil der ersten Einheit (16) in oder an der Gehäusewand des Staubsaugers angeordnet ist, zum Beispiel in der Gehäusewand ausgebildet, angeordnet zwischen zwei Teilen der Wand oder an der Wand unter einer Schicht z. B. von Farbe.

10. Staubsaugersystem nach einem der Ansprüche 1-9, wobei die Staubsaugervorrichtung einen tragbaren Handstaubsauger, insbesondere einen Nass- und Trockenstaubsauger umfasst, der ein unteres Teil (31) besitzt, das so ausgelegt ist, dass es den Staubsauger in einer aufrechten Lagerungsposition hält, und wobei wenigstens ein Teil der ersten Einheit (16), vorzugsweise eine erste Spule (19), in dem unteren Teil (31) oder direkt daran angeordnet ist.

11. Staubsaugersystem nach einem der Ansprüche 1-9, wobei der Staubsauger ein Stabelement (51) zum Anordnen eines tragbaren Handstaubsaugers (52) in dem Stabelement (51) und einen tragbaren Handstaubsauger (52) umfasst, wobei die erste Einheit (16) in dem Stabelement (51) angeordnet ist.

12. Staubsaugersystem nach Anspruch 10, wobei das Stabelement (51) eine dritte Spule (55) umfasst und wobei der tragbare Handstaubsauger (52) eine vierte Spule (56) umfasst.

13. Staubsaugersystem nach Anspruch 11, wobei die dritte Spule (55) mit der ersten Einheit (16) verbunden ist und in dem Bereich angeordnet ist, in dem der tragbare Handstaubsauger (52) angeordnet werden kann, und wobei die vierte Spule (56) mit einer Batterie (15) in dem tragbaren Handstaubsauger (52) verbunden ist und in dem Bereich des tragbaren Handstaubsaugers angeordnet ist, der zu dem Stabelement zeigt, wenn der tragbare Handstaubsauger in dem Stabelement angeordnet ist.

14. Staubsaugersystem nach einem der Ansprüche 1-9, wobei der Staubsauger ein Stabelement (51) zum Anordnen eines tragbaren Handstaubsaugers (52) in dem Stabelement (51) und einen tragbaren Handstaubsauger (52) umfasst, wobei die erste Einheit (16) in dem tragbaren Handstaubsauger (52) angeordnet ist.

15. Staubsaugersystem nach einem der Ansprüche 1-9, wobei der Staubsauger einen Behälter-Staubsauger umfasst und wobei wenigstens ein Teil der ersten Einheit (16) an der Seite des Gehäuses, in der Rückseite des Gehäuses oder an der Unterseite des Gehäuses angeordnet ist.

## Revendications

1. Système aspirateur (1), comprenant un aspirateur (10) comprenant : un premier boîtier (11) comprenant une entrée d'air (12), une sortie d'air (13), une unité moteur-ventilateur (14) destinée à créer un flux d'air (F) depuis l'entrée d'air (12) jusqu'à la sortie d'air (13), une batterie (15) destinée à alimenter l'unité moteur-ventilateur (14) et une première unité (16) destinée à charger la batterie (15) ;
et un chargeur (20) comprenant un deuxième boîtier (21) comprenant une deuxième unité (26) destinée à charger la batterie (15) ;
la première unité (16) étant reliée à la batterie (15) et la deuxième unité (26) étant adaptée à être reliée à une source d'énergie externe (22), et la première unité (16) et la deuxième unité (26) étant adaptées au transfert d'énergie sans fil de la deuxième unité (26) à la première unité (16), la première unité (16) comprenant une première unité de commande (17) destinée à commander l'état de la batterie (15),
**caractérisé en ce que** la deuxième unité (26) comprend une deuxième unité de commande (27) destinée à commander la charge et/ou l'état de la batterie (15).

2. Système aspirateur selon la revendication précédente, dans lequel la première unité (16) comprend une ou plusieurs premières bobines (19), et la deuxième unité comprend une ou plusieurs deuxièmes bobines (29).

3. Système aspirateur selon les revendications 1 ou 2, dans lequel la deuxième unité de commande (27) est dotée de moyens (28) de contrôle de la présence de l'aspirateur dans une position de charge.

4. Système aspirateur selon l'une quelconque des revendications 1 à 3, dans lequel la deuxième unité de commande (27) reçoit des informations concernant l'état de la batterie (15) en provenance de la première unité de commande (17) lorsque l'aspirateur se trouve dans la position de charge.

5. Système aspirateur selon l'une quelconque des revendications 1 à 4, dans lequel la deuxième unité de commande (27) reçoit des informations en provenance de la première unité de commande (17) indiquant lorsque la charge de la batterie doit débuter et/ou lorsque la charge de la batterie doit finir.

6. Système aspirateur selon l'une quelconque des revendications 1 à 5, dans lequel la première unité de commande (17) transmet des informations à la deuxième unité de commande (27) par communication sans fil, par ex. NFC ou radio, lorsque l'aspirateur se trouve dans la position de charge.

7. Système aspirateur selon l'une quelconque des revendications 1 à 5, dans lequel la deuxième unité de commande (27) transmet des informations à la première unité de commande (17) par communication sans fil, par ex. NFC, lorsque l'aspirateur se trouve dans la position de charge.

8. Système aspirateur selon l'une quelconque des revendications précédentes, dans lequel le chargeur (20) est agencé pour être placé sur le sol, sur un mur ou sur une table, un banc ou similaire.

9. Système aspirateur selon l'une quelconque des revendications précédentes, dans lequel au moins une partie de la première unité (16) est agencée dans ou à proximité de la paroi du boîtier de l'aspirateur, par ex. moulée dans la paroi du boîtier, agencée entre deux parties de la paroi, ou sur la paroi sous une couche par ex. de peinture.

10. Système aspirateur selon l'une quelconque des revendications 1 à 9, dans lequel le dispositif aspirateur comprend un aspirateur portable tenu en main, plus particulièrement un aspirateur pour déchets humides et secs, doté d'une partie dessous (31) agencée pour soutenir l'aspirateur dans une position de rangement droite, et dans lequel au moins une partie de la première unité (16) est agencée dans ou près de ladite partie dessous (31), de préférence une première bobine (19).

11. Système aspirateur selon l'une quelconque des revendications 1 à 9, dans lequel l'aspirateur comprend une partie manche (51) dans laquelle un aspirateur portable tenu en main (52) est destiné à être agencé et un tel aspirateur portable tenu en main (52), la première unité (16) étant agencée dans la partie manche (51).

12. Système aspirateur selon la revendication 10, dans lequel la partie manche (51) comprend une troisième bobine (55), et l'aspirateur portable tenu en main (52) comprend une quatrième bobine (56).

13. Système aspirateur selon la revendication 11, dans lequel la troisième bobine (55) est reliée à la première unité (16) et est située dans la région où l'aspirateur portable tenu en main (52) peut être agencé, et la quatrième bobine (56) est reliée à une batterie (15) dans l'aspirateur portable tenu en main (52) et est agencée dans la région de l'aspirateur portable tenu en main en regard de la partie manche lorsque l'aspirateur portable tenu en main est agencé dans la partie manche.

14. Système aspirateur selon l'une quelconque des revendications 1 à 9, dans lequel l'aspirateur comprend une partie manche (51) dans laquelle un aspirateur portable tenu en main (52) est destiné à être agencé et un tel aspirateur portable tenu en main (52), la première unité (16) étant agencée dans l'aspirateur portable tenu en main (52).

15. Système aspirateur selon l'une quelconque des revendications 1 à 9, dans lequel l'aspirateur comprend un aspirateur traîneau et au moins une partie de la première unité (16) est agencée sur le côté du boîtier, dans l'arrière du boîtier ou sur le dessous du boîtier.
